# EUROPEAN PATENT APPLICATION

(11) **EP 1 770 552 A2**
(43) Date of publication of application: **04.04.2007**
(21) Application number: 06014579.4
(22) Date of filing: 13.07.2006
(51) Int. Cl.: G06F 17/30

(54) **System for building a website for easier search engine retrieval.**

(30) Priority: 13.07.2005 US 698880 P
(71) Applicant: Rivergy, Inc., Tampa FL 33610 (US)
(72) Inventor: Lasa, Ricardo, Tampa, Florida 33602 (US); Clark, Derek, Seminole, Florida 33772 (US); Munday, Matt, Tampa, Florida 33647 (US)
(74) Representative: Dilg, Andreas

(57) **Abstract**

A website development system and an optimizing sub-system is capable of instructing a user on measures to customize a website in order to increase visibility of the website to website search engines. The optimizing sub-system analyzes content provided by the user, or otherwise generated for the user, and notifies the user if the system is optimized or needs additional optimization. The website development system may be capable of generating content, such as text and images, which may be optimized for search engine visibility, such as appropriate length of text paragraphs, keyword usage, keyword density, and other optimization protocols. The website development system may provide an interactive system for a user to develop a website that encourages the user to complete the steps in the development process.

## Description

### RELATED APPLICATIONS

The application claims the benefit of U.S. Provisional Application Serial No. 60/698,880, filed July 13, 2005.

### FIELD OF THE INVENTION

The field relates to the development of websites.

### BACKGROUND

The World Wide Web ("web") has made the distribution of information and pictures to the internet-connected public very simple and easy. In order to use the web for this purpose, an organization or an individual needs only to publish information and pictures to the web by creating a website. A business organization may create a website for many reasons, such as marketing its products and services, providing customer service or accepting customer orders. An individual may create a website for other reasons, such as displaying pictures of her family, or posting comments about events in her life that may be interesting to others.

Although distributing information and pictures via the web is simple and easy once information and pictures are on a website, publishing the information and pictures onto a website is difficult for a novice user because technical skill is required to set up and maintain a website and an abundant amount of effort is required to organize and design the layout of the information and pictures on the website in an aesthetically pleasing way. In recognizing the challenges to a novice user, website development tools have been developed to assist the novice user in creating and maintaining a website.

Current website development tools simplify the process of creating and maintaining a website. One such tool provides a form that the user fills out on the web. The tool creates a website from the information entered in the form by automatically generating standard HTML webpages. Pictures may also be uploaded into the website development tool and added to the webpages.

Many website development tools do not provide visual advice on measures to customize the website content in order to increase the visibility of the website to search engines, such as "Google," "Yahoo!," "AOL" and "MSN."¹ Many website development tools only offer an additional service to have a human consultant customize the content text of the website, after the website has been created, in order to increase visibility to search engines.

Many known website development tools do not automatically generate webpage content text that is search engine optimized for character-count and keyword density. What is needed is a website development tool that is user-friendly and easy to use.

### SUMMARY OF INVENTION

A website development system capable of providing visual advice on measures to customize the website content in order to increase visibility of the website to website search engines, which automatically performs search engine optimization analysis on content text and provides real-time visual and aural feedback concerning the search engine optimization analysis. The website development system is also capable of automatically generating webpage content text that is search engine optimized.

One advantage of an interactive website development system is that advice concerning search engine optimization may be visually displayed to the user creating or maintaining a website by an optimization sub-system. The advice may instruct the user to input additional text and/or to increase the usage and/or density of keywords. Advice may include an optimal range for the usage of characters in the content text of a web page on the website. The advice information displayed may also quantify an optimal range for the number of times keywords are found within the content text of a web page on the website.

Another advantage of the website development system is that it may provide a GUI interface that automatically kicks off the execution of a search engine optimization analysis whenever content text on a webpage is updated during website creation or maintenance. Search engine optimization analysis may include counting the number of characters in content text on a webpage and comparing the number to an optimal range. Search engine optimization analysis may also include determining the keyword density in the content text and comparing the density to an optimal range.
¹ Google^{®} is a registered trademarl of Google, Inc.; Yahoo! ^{®} is a registered trademark of Yahoo, Inc., AOL^{®} is a registered trademark of AOL, LLC; MSN^{®} is a registered trademark of Microsoft Corporation.

Another advantage of the website development system is that it may provide real-time visual and aural feedback to a user who is creating or maintaining a website concerning whether or not content text is optimal on a webpage. During website creation or maintenance, an user may update the content text on a webpage causing an automatic search engine optimization analysis. The result of the analysis may be displayed to the user. The displayed result may be either that the content text is optimal or that the content text is not optimal. The reason for the content text not being optimal may also be displayed, such as if the density of a keyword is not within an optimal range.

Yet another advantage of a website development system with an optimizing sub-system is that the optimizing sub-system may be capable of instructing a user on measures to customize a website in order to increase visibility of the website to website search engines, such as Google, Yahoo, Altavista, and Microsoft search engines.² One advantage of the optimizing sub-system is that it may be capable of analyzing content provided by the user, or otherwise generated for the user, and notifying the user if the system is optimized or needs additional optimization. Another advantage is that the website development system may be capable of generating content, such as text and images, which may be optimized for search engine visibility, such as appropriate length of text paragraphs, keyword usage, keyword density, and other optimization protocols. Another advantage is that the website development system may provide an interactive system for a user to develop a website that encourages the user to complete the steps in the development process.

The website development system may have an additional advantage of providing the capability to automatically generate webpage content text that is search engine optimized for character-count and keyword density.

### BRIEF DESCRIPTION OF THE DRAWINGS

The drawings provide some examples of the invention.
² Google^{®} is a registered trademark of Google, Inc.; Yahoo! ^{®} is a registered trademark of Yahoo, Inc., Altaviste^{®} is a registered trademark of Overture Services, Inc.; MSN^{®} is a registered trademark of Microsoft Corporation.

Figs 1A-1N, 1P and 1Q schematically illustrate block diagrams of examples of a system for building a website and sub-systems.

Figs 2-3G illustrate some examples of display and data entry screens presented by a system for building a website.

Figs 4A-4F schematically illustrate block diagrams of examples of a system for building a website.

Fig 5 depicts one example of a search engine optimization system with applications to a main paragraph of a home page.

Fig. 6 depicts one example of a preview system with a display of image and text.

Fig. 7 depicts an example of a search engine optimization system with applications to keyword and paragraph content.

Fig 8 depicts another example of a search engine optimization system with applications to a main paragraph of a home page.

Fig. 9 depicts another example of a preview system with a display of image and text.

Fig. 10 depicts an example of a search engine optimization system with applications to paragraph content.

### DETAILED DESCRIPTION

The detailed description and drawings provide specific examples of the invention, but the present invention should not be limited merely to the examples disclosed. Instead, the invention should be limited only by the claims that may eventually issue. Many variations in the system, changes in specific components of the system and uses of the system will be readily apparent to those familiar with the field of the invention based on the description and drawings of this disclosure.

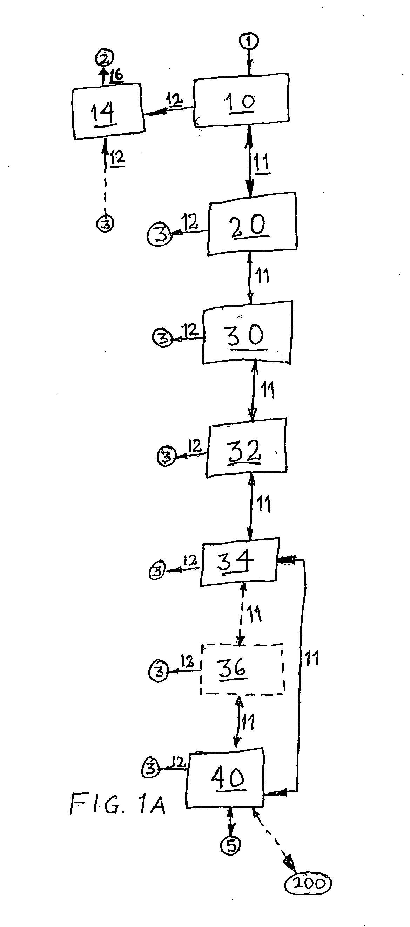

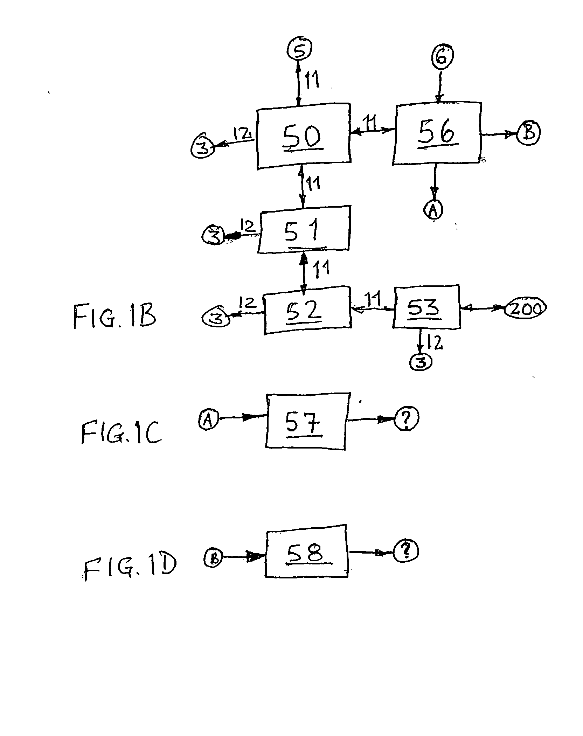

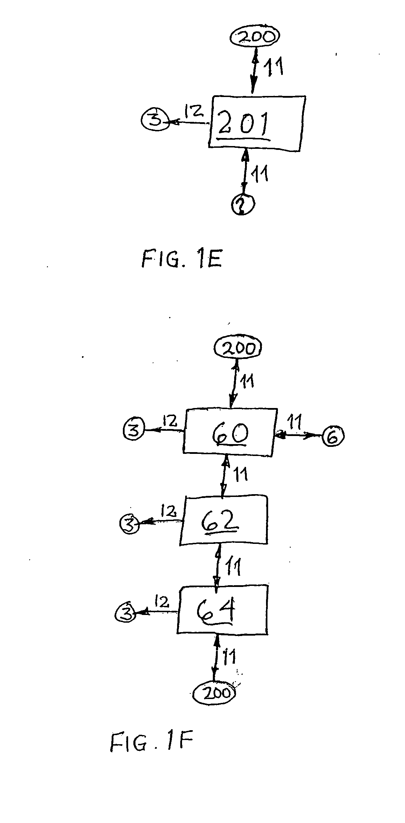

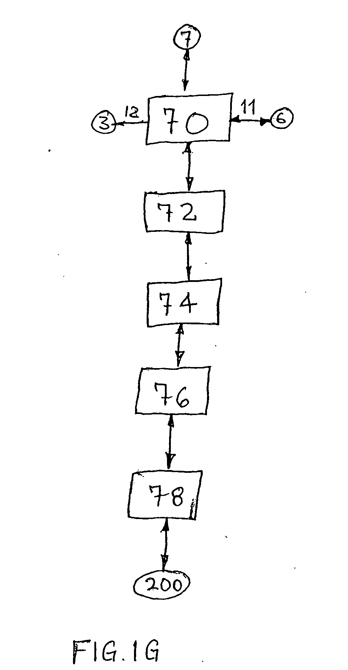

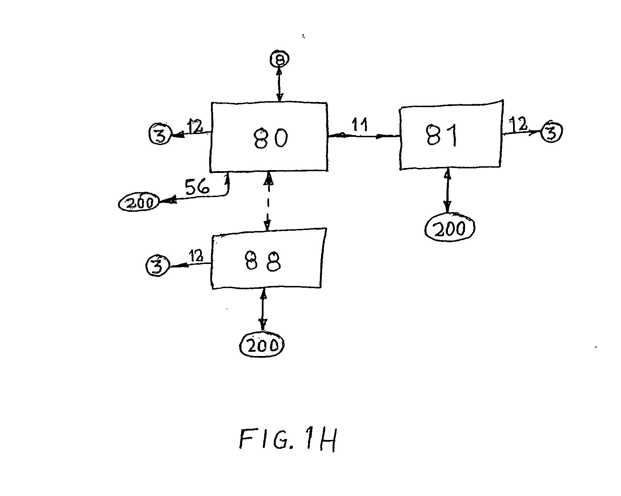

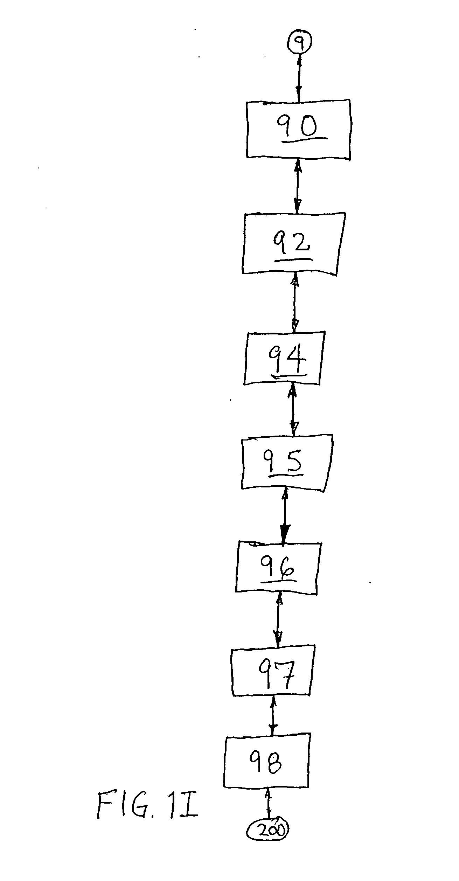

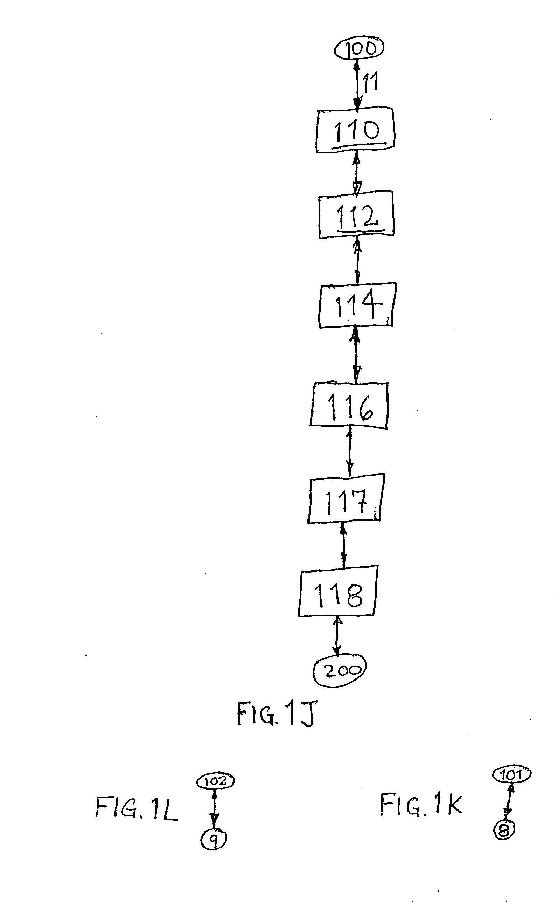

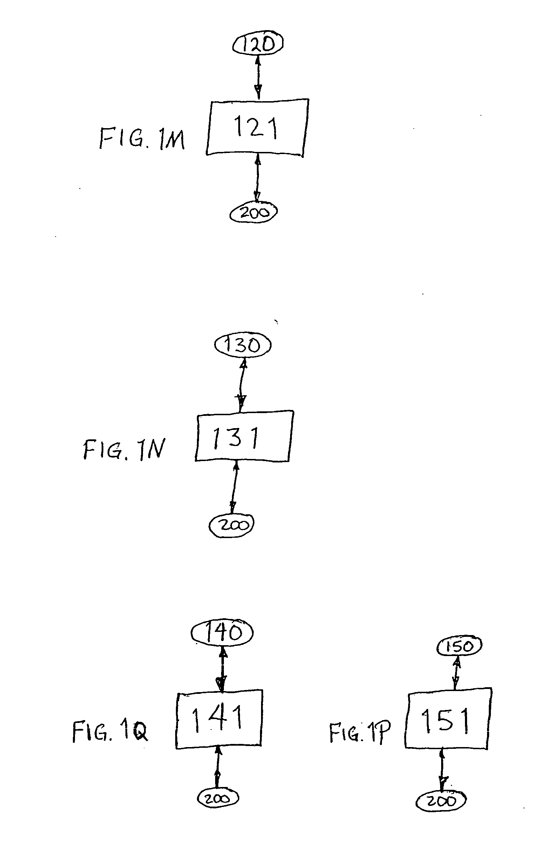

One example of a system for building a website is one tailored to use by business. In this example, the system is interactive and tutorial and provides customization advice and improves the visibility of the website to search engines. Figure 1 illustrates a portion of a flow diagram for a website builder system. The website builder system is an example of the present invention, and many variations, alterations and additions to this example will become apparent to those familiar with the field based on the drawings and this disclosure.

In step 1, (depicted at the top.), a user commences website development. A welcome screen 10 is displayed. In this example, the user has at least two options. One option is to continue 11 to the website builder system. Another option is to cancel 12 going to the website builder system. If a user chooses to cancel 12, then a blank template may be established and the user is asked in a subsequent screen if the user really wants to cancel, i.e., cancellation step 14. This cancellation step 14 may be common to the welcome screen 10 and all of the subsystems screens 20-200. Any time that the user chooses to cancel 12, the website builder system having the current default template for each of the pages of the website that are already completed is established. The user then may be asked if the user really wants to cancel, and if the user indicates the cancellation is actually desired, then the system continues to a termination screen 2. The termination screen may provide options for restarting the website builder system, purchasing hosting for a website, or previewing the current default website, which may contain all of the information that has been entered and confirmed by the user for each completed page of the website.

If continue or next 11 is selected by the user, then the system proceeds to the next step. The process associated with next or continue 11 is shown has as having arrows on each end of the process. These arrows indicate that the process 11 is reversible. By reversible, it is meant that the user may be allowed to select back step from the next step in the process after next or to continue or 11 past the previous process step to the next step. For example, if the user selects "next" in the step 10, the process proceeds to step 20, but if the user selects "back" in step 20, then the process 11 returns to step 10. In this example, all processes in this figure marked with the same label perform the same function. For example, the cancellation process 12 takes the user to the cancellation process step 14. In other examples, the next/back process step 11 moves the user forward or back one processing step.

The interactive system displays a screen for input of information 20, may provide an example of the information to be entered 30-32, optionally provides customization advice 36 to improve the visibility of the website information on search engines and requires the user to move to the next step by selecting or entering a command in the system 11. The system provides feedback and encouragement to the user 11, 34 during the development process. In step 30, text information may be suggested based on input from the user, such as business, nonprofit or personal use of the website and/or keywords about the website. In step 32, images may be provided for incorporating into the user's website, or a user may upload their own images for use in the website. Feedback and encouragement to the user 11, 34 may be provided in a process step 34 or during as a portion of the transition between process steps 11. The website may be shown in its updated form 40 with an opportunity to make corrections to the website prior to proceeding to a subsequent subsystem 5, 200.

In alternative examples, the cancellation process 12 may save any changes to the website builder system and may proceed directly to the termination step 2. In another example, selecting "cancel" may not enter a cancellation process 12, but may merely activate a back process 11. For example, an user may find this step useful in a website preview step prior to moving to a new assistant subsystem. Examples of assistant subsystems are the site header assistant subsystem 50, the copyright assistant subsystem 60, the home page assistant subsystem 70, the "select an image" assistant subsystem 80, the search engine optimization assistant subsystem 90, the finished home page assistant subsystem 100, the "about us" assistant subsystem 110, the contact us/information page assistant subsystem 120, the contact page assistant subsystem 130, the products page assistant subsystem 140, the logo assistant subsystem 150, and the preview site subsystem 200. (Figures 1B-1G respectively.) These examples are merely illustrative of subsystems helpful in building a web site. Many other subsystems may be included to assist the user in building a website.

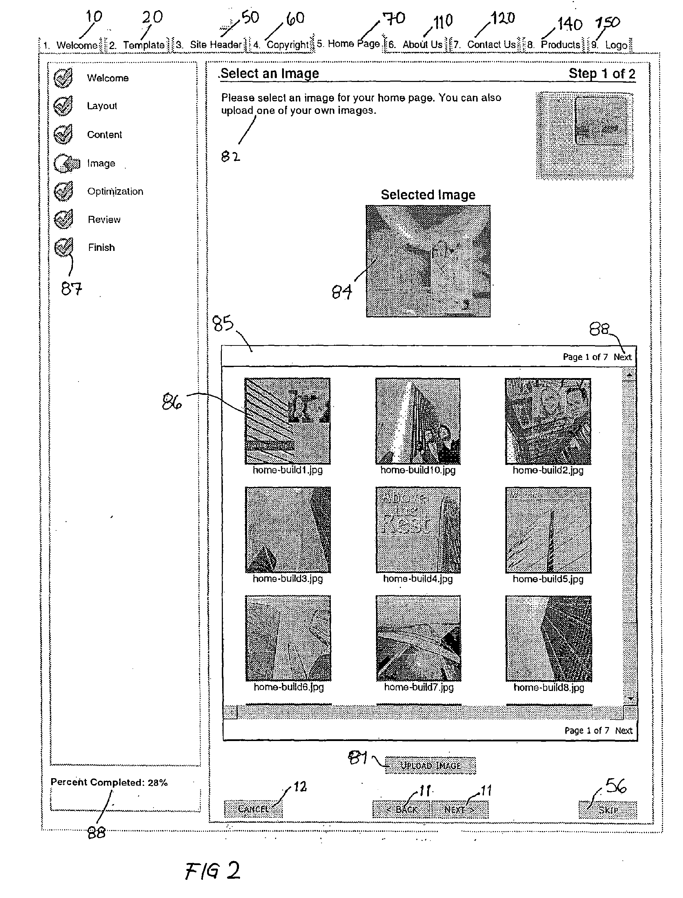

In one example, subsystems may be accessed sequentially by the website builder system or may be selected from a menu or a tab, which is selectable by the user. Thus, the user may be able to enter any subsystem of the website builder system directly. An example of the use of tabs is shown in Figure 2, which illustrates an example of the image selection assistant subsystem 80. Various tabs 10, 20, 50, 60, 70, 110, 120, 140, 150 are associated with assistant subsystems 10, 20, 50, 60, 70, 100, 120, 140, 150. Selecting one of the tabs proceeds directly to the assistant subsystem corresponding with the tab.

The image selection assistant subsystem 80 of Figure 2 is one example of controls which may be offered to the user within any of the subsystems. Instructions 82 inform the user on how to proceed and options that the user may have in selecting an image. A view of the currently selected image 84 shows either the currently selected image or the default selection, if a default selection is provided by the image selection assistant subsystem 80. A window 85 may be used to show a variety of stock images 86 for use in user websites. Each image 86 may be selected by using a pointing device. Examples of pointing device include a mouse, track ball, touch pad, touch screen or any other pointing or selection device. Several pages may be provided of stock images, and a mechanism may be provided for selecting a new page of images 88. In one example, the user is allowed to upload one of user's own images 81. Progress indicators 87, 88 may be used to show the progress of the user through the website builder system. For example, a percent completed 88 may be shown. In another example, a list of tasks or assistant subsystems completed 87 is shown.

An example of the subsystem associated with the image illustrated in Figure 2 is illustrated in Figure 1H. The user enters the process 8 of the image selection subsystem 80 from the immediately proceeding subsystem, such as the home page assistant subsystem 70 of Figure 1G. The home page assistant subsystem may be directed to a preview site 200. Any system, subsystem or a step in a subsystem may be directed to a preview subsystem 200 which shows the current status of the process, provides a preview of the website or web page currently being modified, determines from the previous processing step the next processing step, and directs the user to next processing step. The question mark shown in Figure 1E for the preview subsystem 200 indicates that the process step 201 determines the next step in the process itself. For example, a flag or process variable may be passed from the previous process to the preview subsystem 200, and a look-up table may be used to determine the next subsystem to be accessed by the user. In one example, each subsystem continues through a series of steps culminating in a redirection to the preview subsystem 200. For example, as shown in Figure 1B, the site header assistant subsystem 50 ordinarily proceeds from its initial processing step to a select layout processing step 51. The next processing step is "a step for entering the header text "52. The next processing step is a step for entering a slogan or motto 53. Upon completion of entering slogan or motto 53, the site header assistant subsystem 50 proceeds to the preview subsystem 200. However, the example in Figure 1B provides for an alternative path from the initial processing step of the site header assistant subsystem 50.

The skip subsystem 56 may be entered by selecting the skip subsystem 56 button as shown in Figure 2, for example. Any subsystem may be allowed to be redirected to the skip subsystem 56. As shown in Figure 1B, the skip subsystem may be a sub-routine of another subsystem, or it may be accessed from any subsystem by redirection to the skip procedure 6. Once the skip subsystem 56 is selected, the user may select a back process 11, a skip subsystem process A, or a skip step process B. A skip step process B may be used to skip one or more steps. If the skip step process B is used to skip only the current step, then the skip process B is equivalent to the continue/next process 11. As shown in Figure 1 D, the skip step process B determines from the state of proceeding process and the state of the website builder system how many steps to skip. For example, this may be determined from state variables, variables passed by the proceeding process to the skip process 56 or by any another method. If the skip subsystem process A is selected, the skip process subsystem 57 determines redirection to the next subsystem. For example, the process shown in Figure 1B may be redirected to the copyright assistant subsystem 60, as shown in Figure 1F. The example in 1F would first proceed to a preview subsystem 200 prior to redirecting the user to the copyright assistant subsystem 60. In another example, as shown in Figure 1F, the user may select to skip the copyright assistant subsystem 60. If the user chooses to skip the entire subsystem, then the skip subsystem 56 may be redirect the user to the home page assistant subsystem 70, as shown in Figure 1G. Referring now to Figure 1F, the copyright assistant subsystem 60 is now described. The copyright assistant subsystem 60 includes a processing step for laying out the position of the copyright notice text, such as left justified, centered, right justified, or other layout options. By selecting next, the next process 11 moves to a processing a step for entering the text of the copyright text notice 64, and the subsystem terminates by redirecting to the preview subsystem 200.

For example, the preview subsystem 200 allows the user to make changes to either to the layout or the content or both. Then, the preview subsystem 200 redirects the user to the next processing step, such as the home page assistant subsystem 70, shown in Fig. 1G. The home page assistant subsystem 70 may include an image layout processing step 72, a processing step for entering the title of the home page which may offer examples and instructions or selecting a title 74, a process for entering a welcome message text 76 and a process for entering the main paragraph of the home page 78. The home page assistant subsystem may terminate by redirecting to the preview subsystem 200.

The preview subsystem 200 may redirect the user to the next processing step, such as the image selection assistant subsystem 80, which is shown as a block diagram in Figure 1H, for example. Figure 2 shows an example of display for soliciting user interaction with the image selection assistant subsystem 80, as previously described. The image selection assistant subsystem 80 may be terminated by redirecting to the preview subsystem 200.

Next, the preview subsystem 200 may redirect the user to a search engine optimization subsystem 90. For example, the search engine optimization subsystem may be used to prompt the user for meta tags, key phrases, secondary words for key phrases, any other key phrases and the entry of text with, which may improve the visibility of a website to any one using a search engine that relies the content of the website and meta tags.

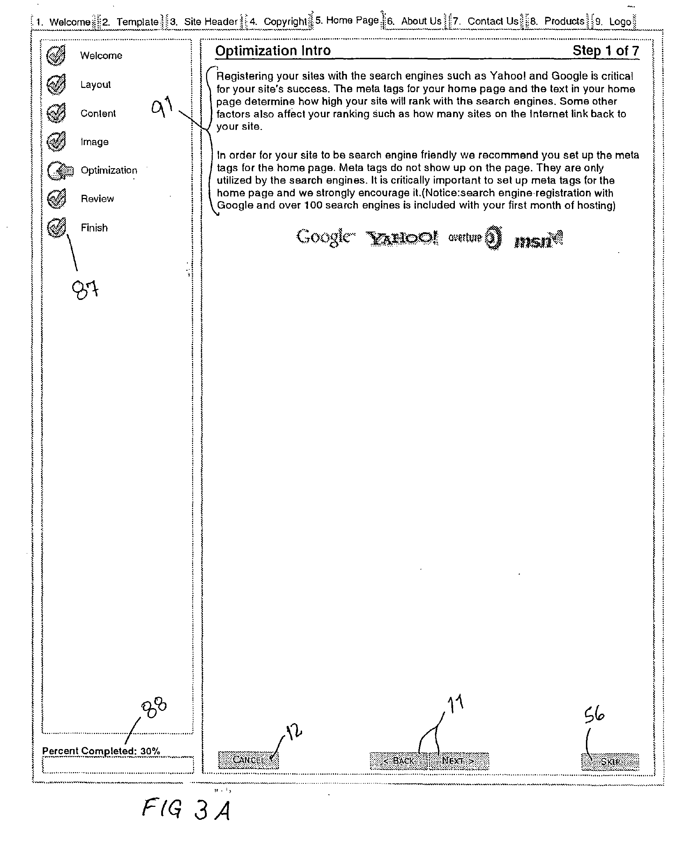

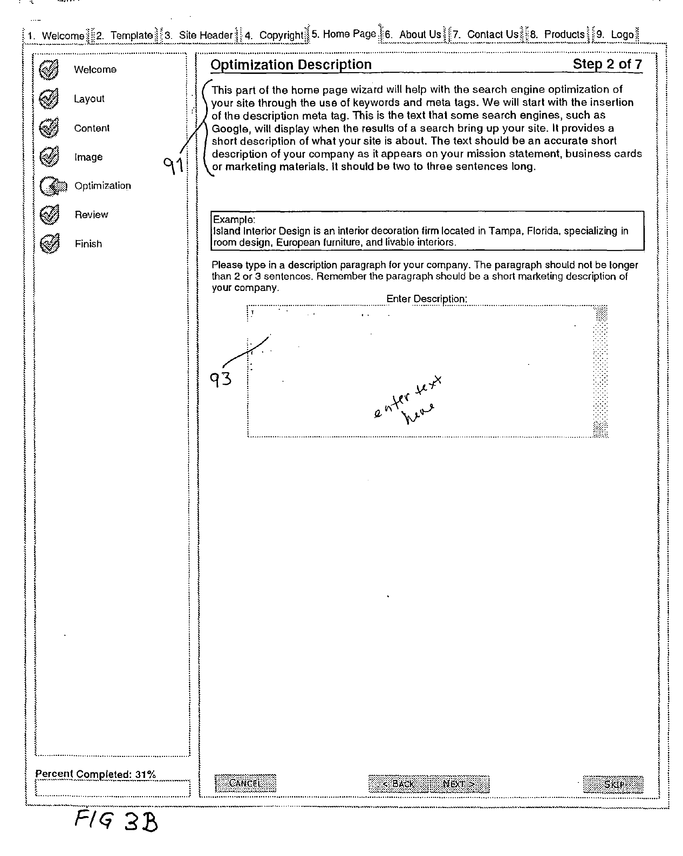

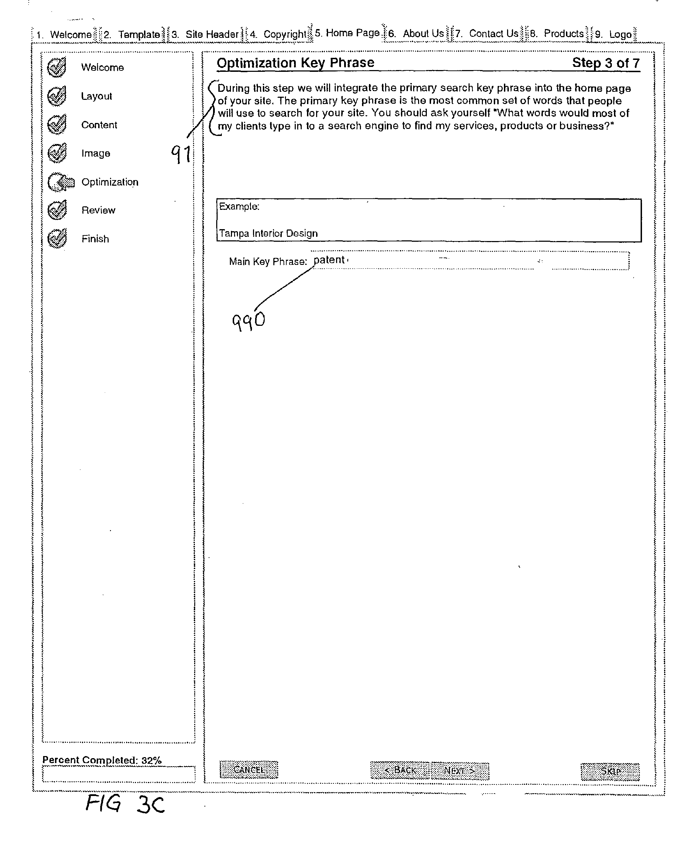

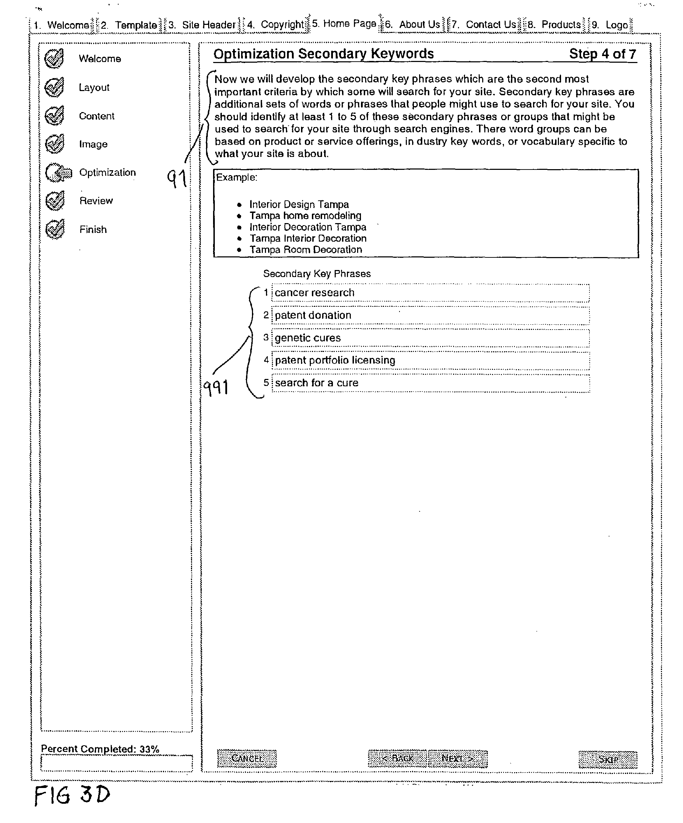

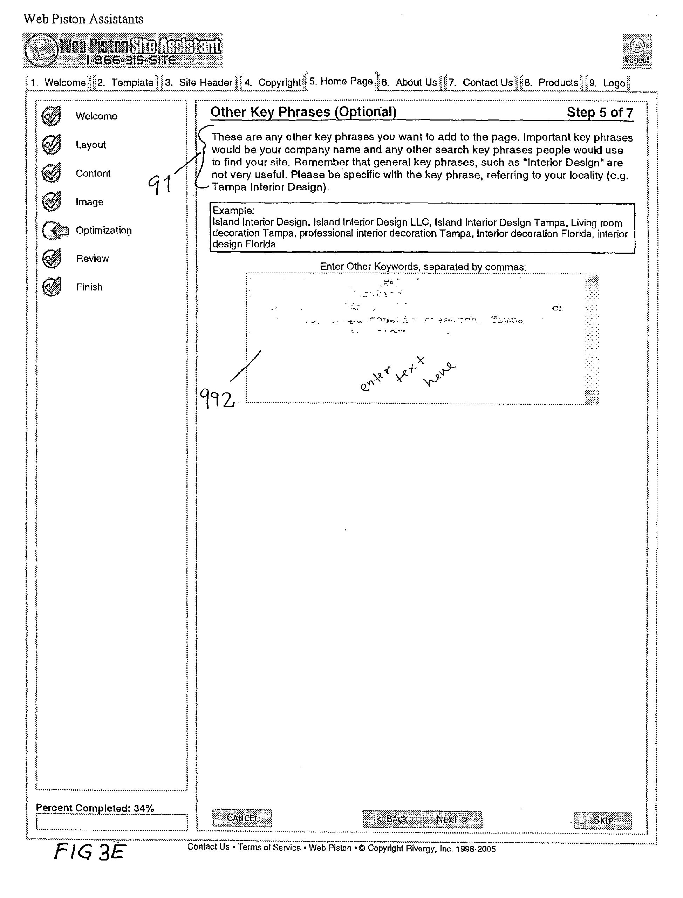

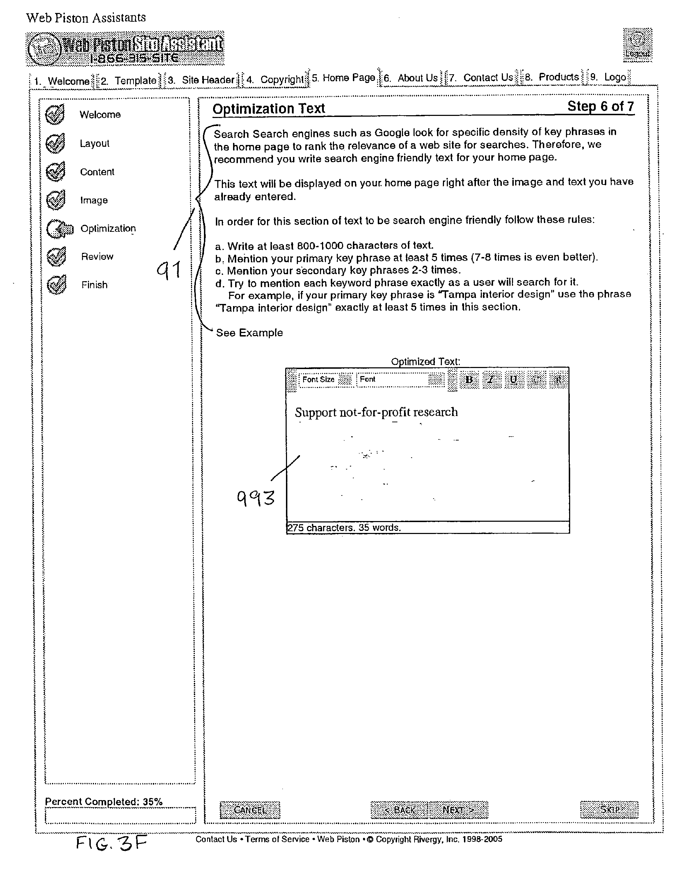

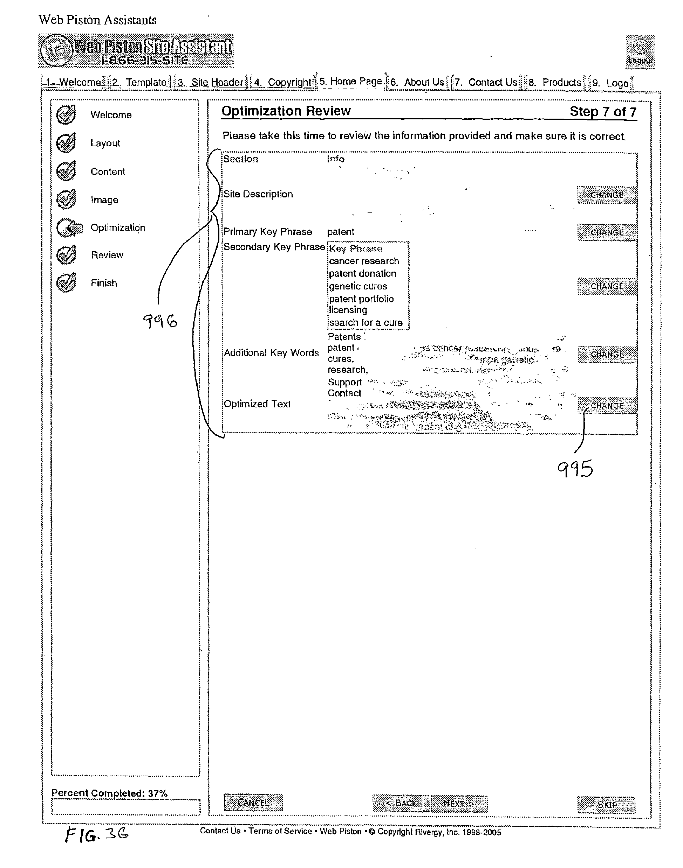

Figure 3A shows a display for introducing the optimization of subsystem 70. The display of Figure 3A may be similar to the display illustrated in Figure 2. However, the optimization subsystem 90 provides instructions 91 relating to optimization of the website for use with search engines. Additional instructions 91 may be provided in a subsequent display, which is part of the process for entering text for a description meta tag 92. In Figure 3C, an example of a display for entering a primary search key phrase for the home page is illustrated. In Figure 3D, a display for entering secondary key phrases 991 is illustrated. In Figure 3E, yet another display is illustrated, which is used for entering other key phrases in a text box 992. Again, additional instructions 91 are provided for optimizing the use of search engines.

In Figure 3F, additional information 91 is provided for adding additional text to the home page, which is used for search engines that look for specific density of key word phrases in the home page in order to rank the relevance of the website to search terms entered in a search engine. For example, an user may enter text in a text window 993, which includes at least 800 to 1000 characters of text, mentions the primary key word phrases at least five times, more preferably seven to eight times, mentions the secondary key phrases two to three times and mentions each key word phrase in the exact way that a user will search for the key phrase at least five times in the at least 800 to 1000 characters of text. As search engines change criteria for ranking website, the information 91 provided to the user may change to promote better optimization of the home page. In Figure 3G, a display is illustrated for search engine optimization review. For example, the text entered for search engine optimization 996 is displayed adjacent to one or more mechanisms for requesting a change in the text 995. By requesting a change in the text, the user may be directed one of the processes 92, 94, 95, 96, 97, 98 of the search engine optimization subsystem 90, depicted in Figure 11.

As illustrated in Figure 1J, an about us page assistant subsystem flowchart includes laying out the about us page 112, entering content for the about us title 114, entering content for the main description of the about us page 116, entering text for a mission statement 117, entering text for the company history 118 and a termination process. The termination process may be provided by redirecting to a preview subsystem 200. For example, the preview subsystem 200 may ultimately direct the user to an about us page image assistant subsystem 80, which allows the user to import or select an image for the about us page, as shown by the flow diagrams in Figures 1K and 1H. The next step may be directing the preview subsystem to an about us search engine optimization subsystem 90. The search engine optimization subsystem 90 may differ from the optimization subsystem used for the home page 90 page subsystem 121 may be used to layout an intercontent for a contact/information page. Information provided may include a title, a page header, customer service contact information, hours of operation and other information, such as frequently asked questions. As illustrated in Fig. 1N, a contact page assistant subsystem 131 may be used together or independently form the contact/information page assistant subsystem 121. The contact page assistant subsystem 131 may be used to layout in intercontent requesting information from a person seeking information or registering with the website. In one example, a products assistant subsystem 141 allows the user to layout and intercontent for a page describing products offered by a business. It may include a product order subsystem within the products page assistant subsystem 141.

In another example, Figure 1P illustrates a block diagram for a logo assistant subsystem. In this example, the logo assistant subsystem 151 provides for creation, upload or selection of a logo by the user. In one example, the logo is automatically inserted on each page of the website. In another example, the user may select whether a logo is inserted on a specific page or not.

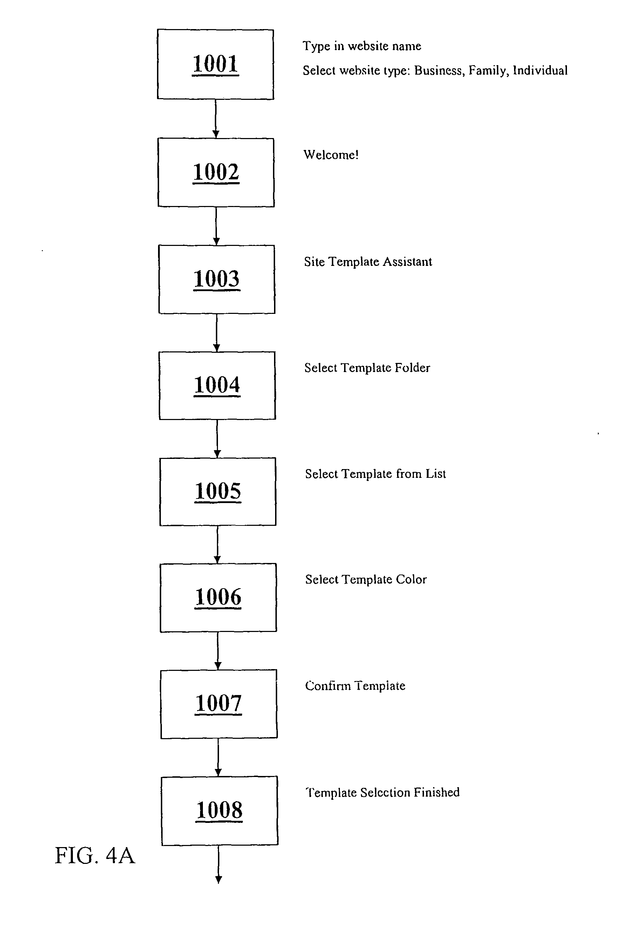

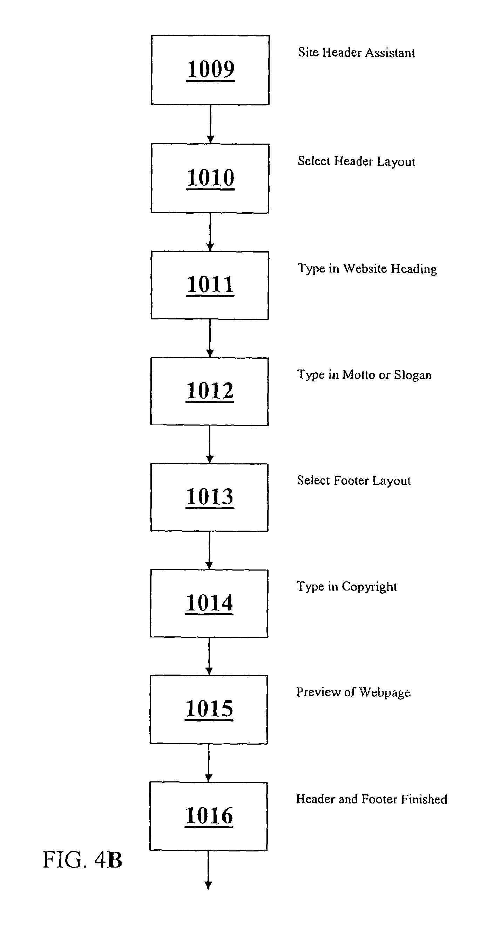

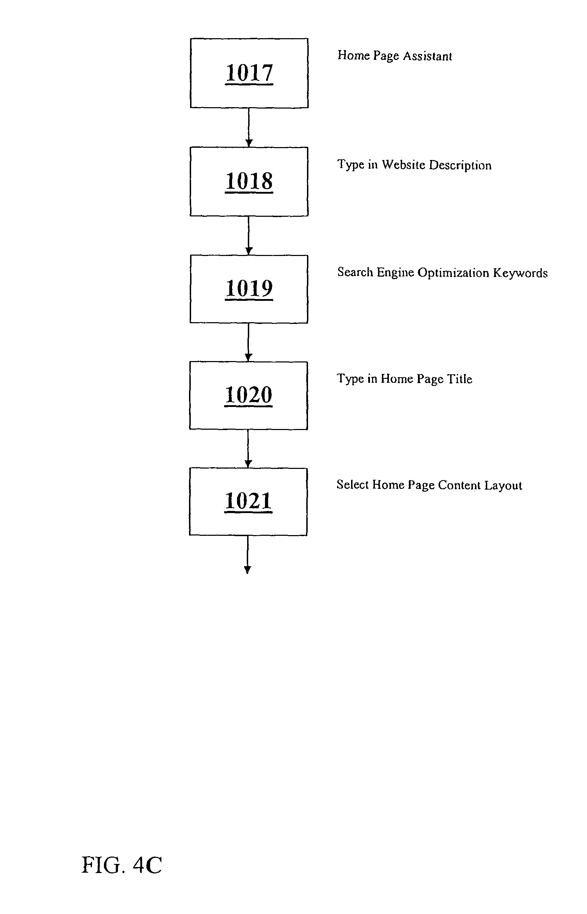

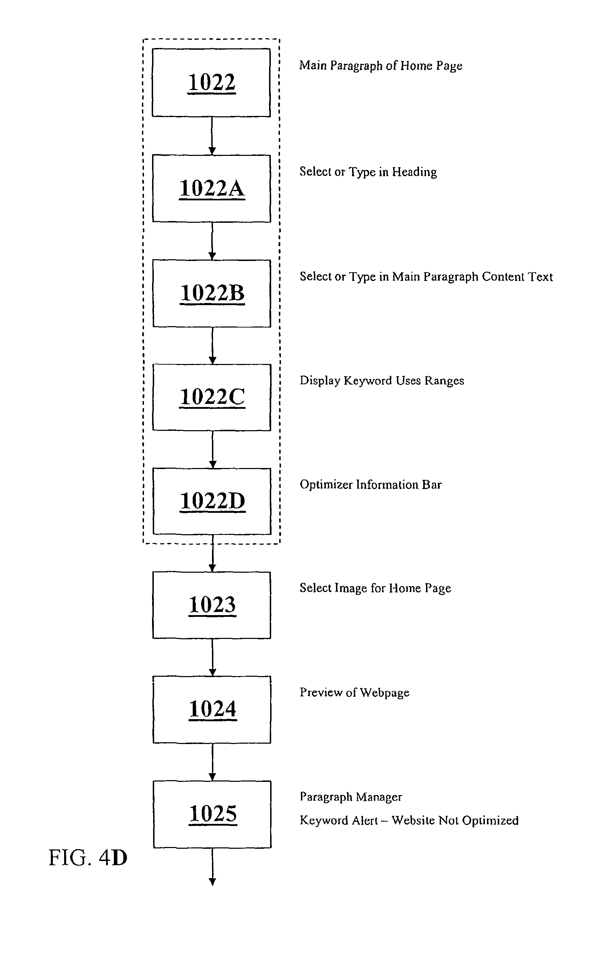

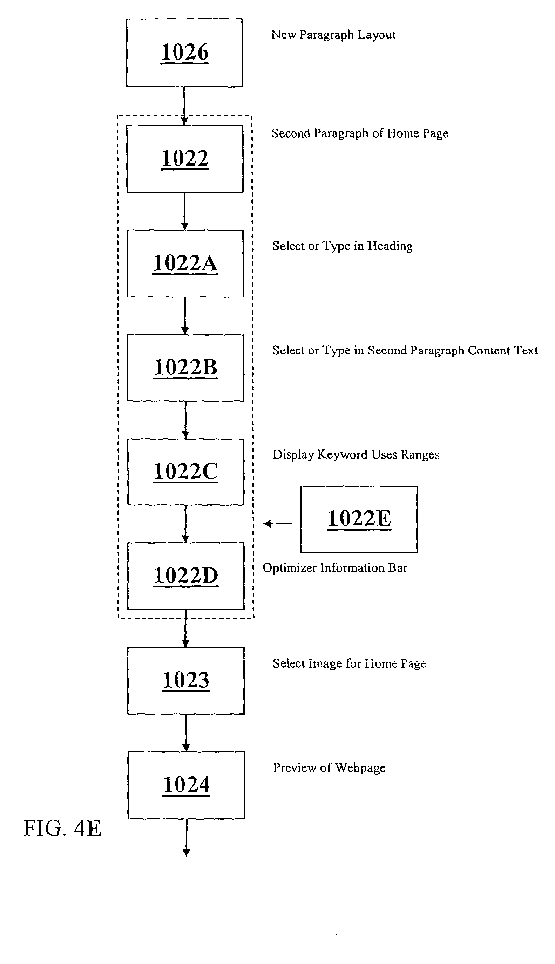

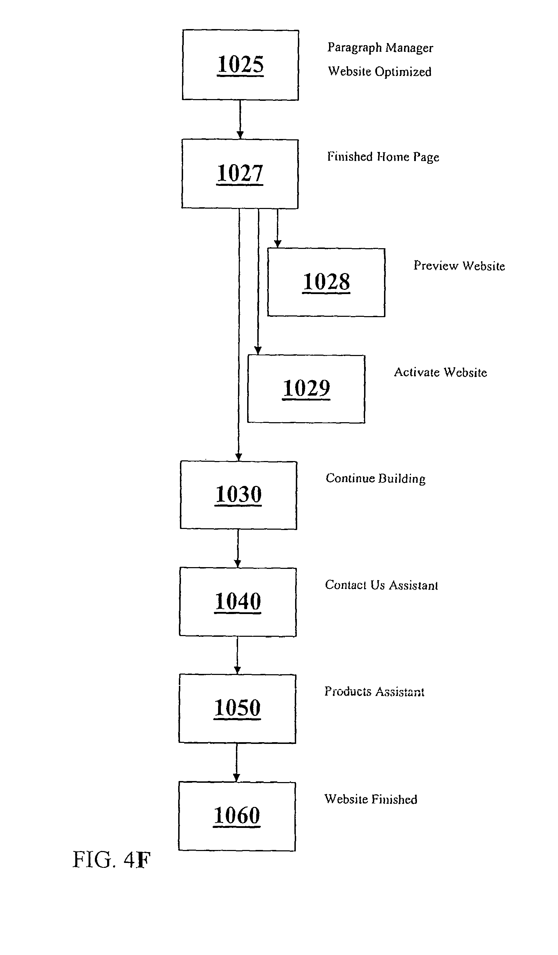

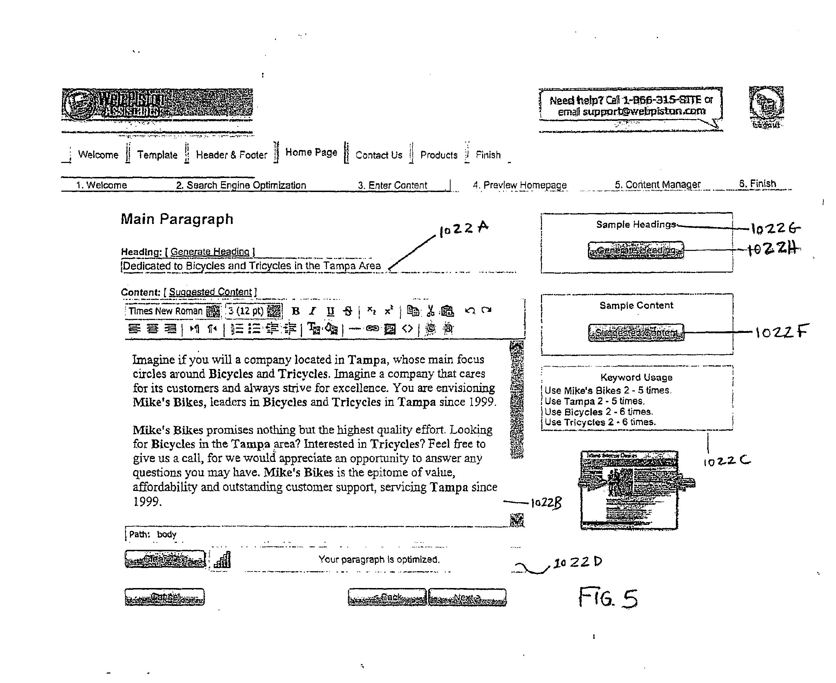

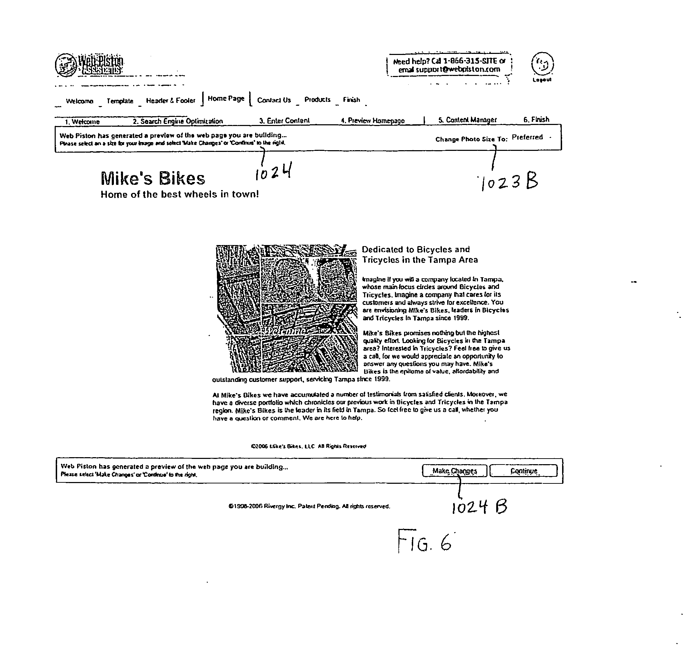

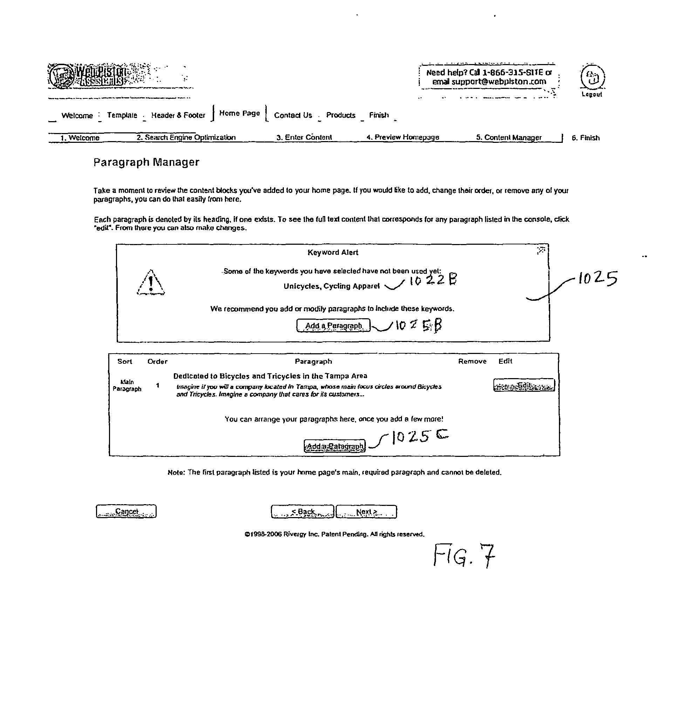

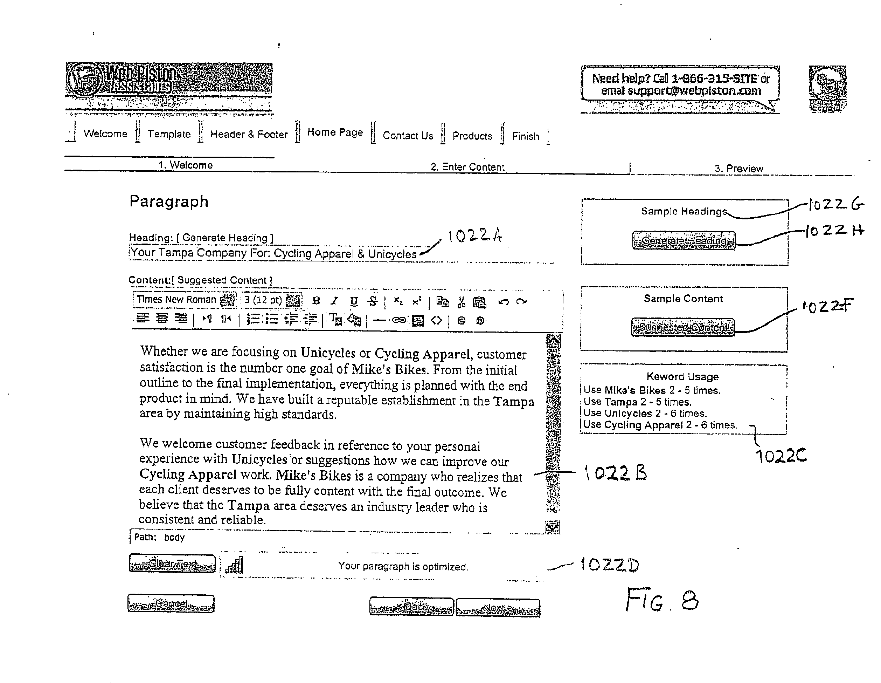

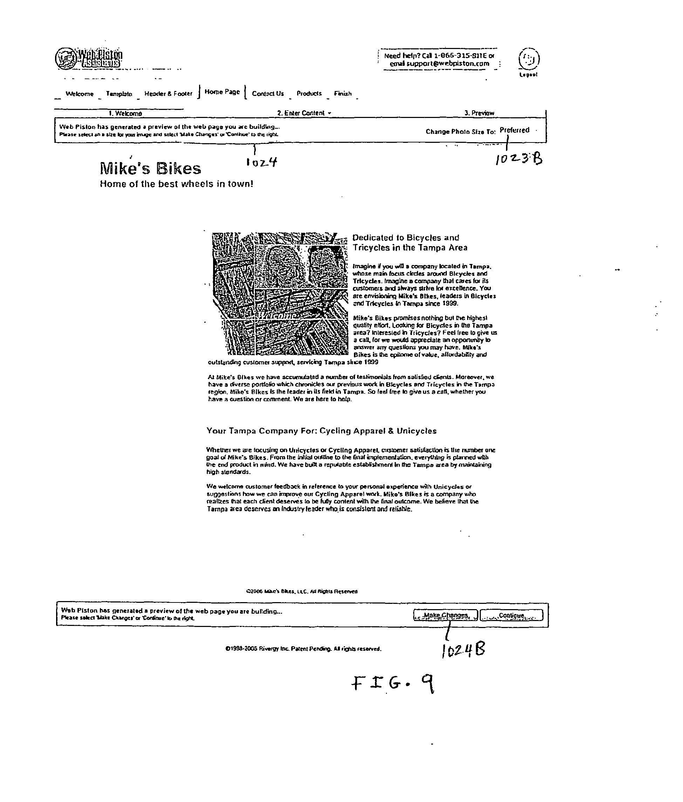

In one example, a system for building a website is illustrated by **FIGS. 4A, 4B, 4C, 4D, 4E** and **4F**. In this example, the system begins by a user accessing a website hosted by a server running the system for building a website. On the first webpage of the site, the user enters a name for the website being built and indicates whether the website is for use by a business, a family or an individual 1001. On the next page, the user is welcomed to the system for building a website 1002. The user clicks on Begin! to proceed.

In **Fig. 4A,** the next page welcomes the user to the Site Template assistant **1003.** The user clicks on Next> to proceed. On the next page, the user is prompted to select a site template from file folders containing template files **1004.** The user clicks on a template folder, such as a folder labeled "Services". On the next page, the user is prompted to select a site template file from a list **1005.** The user clicks on a template file, such as a template file labeled "Standing". On the next page, the selected template file is displayed multiple times differing only in color for each occurrence **1006.** The user is prompted to choose the preferred color template. For example, the user clicks on the green Standing template. On the next page, the user is prompted to confirm the selected template **1007.** The user clicks on Next> to confirm and to proceed. On the next page, the user is notified that the template selection is finished 1008. The user clicks on Next> to proceed.

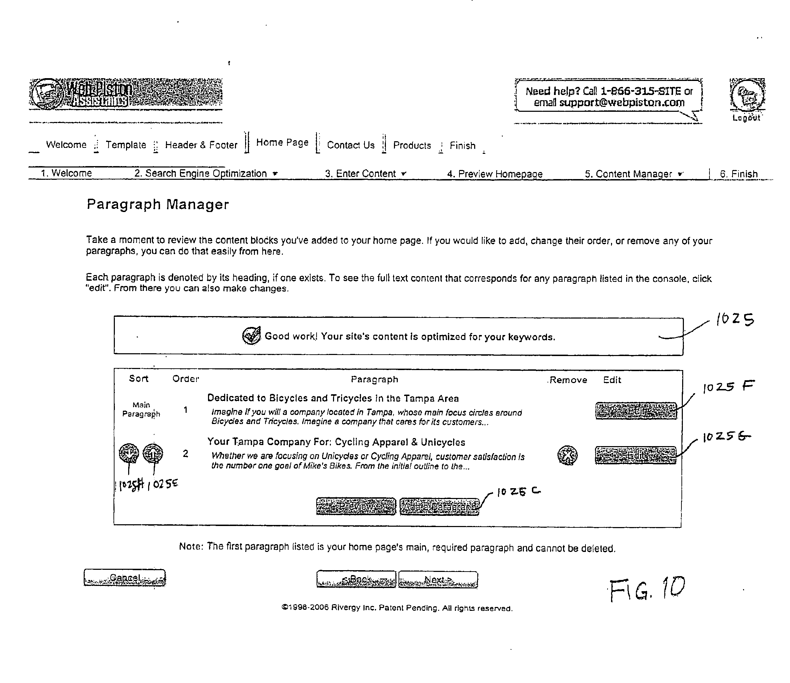

The next page welcomes the user to the Site Header assistant **1009,** as shown in Fig. 4B. The user clicks on Next> to proceed. On the next page, the user is prompted to select Left Align, Center Align or Right Align as the Header Layout by clicking on a radio button below each option **1010.** The user clicks a radio button and Next> to proceed. On the next page, the user is prompted to type in a heading for the website **1011.** The user is advised to type in a heading that is only a few words long. The page displays sample headings. One may have the ability to generate sample headings **1022G,** by clicking on a structure, such as button 1022H, depicted in Figs. 5, 8, for example.

The user types in a heading for the website and clicks Next> to proceed. On the next page, the user is prompted to type in a motto or slogan for the website **1012.** The user is advised to type in a motto or slogan that only a few words long. The page displays a sample motto. The user types in a motto or slogan and clicks Next> to proceed. On the next page, the user is prompted to select Left Align, Center Align or Right Align as the Footer Layout by clicking on a radio button below each option **1013.** The user clicks a radio button and Next> to proceed. On the next screen, the user is prompted to type in the copyright information **1014.** The system suggests copyright text and indicates where the company name should be inserted into the text. The user types in the company name and clicks Next> to proceed. On the next page, the system builds the webpage and displays a preview **1015.** The user clicks Continue to proceed. On the next page, the user is notified that the Header and Footer are finished **1016.** The user clicks on Next> to proceed.

The next page welcomes the user to the Home Page assistant **1017** in **Fig. 4C.** The user clicks on Next> to proceed. On the next page, the user is prompted to type in a Site Description **1018.** The user is advised to type in an accurate short description of the company in two or three sentences. In this example, the system explains that search engines, such as Google, will display the site description when the results of a search bring up the site. The page displays a sample site description. The user types in the site description and clicks Next> to proceed. On the next page, the user is prompted to type in Search Engine Optimization keywords **1019.**

In one example, the first keyword is the company name. In another example, the second keyword is the business location. The user must type in four keywords that describe the main services and products of the business. The user is advised to type the best two keywords describing the services and products into the first two of the four blanks. The user may click on the Add button to type in more than four keywords describing the services and products. The user types in the company name, business location, four keywords and clicks Next> to proceed. On the next page, the user is prompted to type in a Home Page Title **1020.**

The system suggests three home page titles and fills in the blank with one of them. The user may accept the home page title in the blank or overtype it. The user accepts the suggested home page title and clicks Next> to proceed. On the next page, the user is prompted to select Left Image, Right Image or No Image as the Home Page Content Layout by clicking on a radio button below each option **1021.** The user clicks a radio button and Next> to proceed.

In **Fig 4D,** the next page displays the Main Paragraph of the home page **1022.** First on this page, the system automatically generates a suggested heading for the home page that contains the previously entered location keyword and first two keywords describing the services and products and places it in the heading blank **1022A,** also depicted visually in **Figs. 5, 8,** for example. For example, the user may generate sample headings via a structure such as a button at **1022H.** The user may accept the suggested heading or may overtype it. The user may also click the Generate Heading button **1022H** to generate a new and different heading based on the keywords. Each time the button is clicked the system fills in the heading blank with a new heading containing the location keyword and the first two keywords describing the services and products. Second on this page, the system automatically generates and displays content text by suggesting sentences and paragraphs which contain the previously entered company name keyword, the location keyword, and the first two keywords describing the services and products and which have been determined to be optimized by the search engine optimization analysis **1022B.**

For example, the context text may contain a number of characters, such as 750 characters. The keywords may be repeated between two to five times, more preferably up to 6 times, even more preferably up to 7 times or more. Depending on the ranking of importance of certain keywords, such as by ranking the first two keywords as more important than subsequently entered keywords in a keyword (or keyword phrase) list, the optimizing engine may suggest to the user that additional usage of keywords should be added to one or more of the paragraphs making up the content text. It should be understood that the keywords may be limited to single words or may be key phrases, which are both describe herein by the term keywords. In one example, both the usage of keywords and the density of usage of keywords (i.e. count of a keyword divided by the total number of words or characters of content text) is used in the analyzer engine to determine if keyword usage is optimized for visibility of the website to commercial search engines.

If content text is automatically generated for the user, the user may accept the automatically generated content text or may overtype some or all of it. The user may also click the Suggested Content button **1022F,** as shown in Figs. 5 and 8, for example, to generate a new and different content text containing keywords. Each time the suggested content button 1022F button is clicked, the system automatically generates new content text for one of the paragraphs such as the mail paragraph containing the company name keyword, location keyword, and the first two keywords describing the services and products or other paragraphs.

A system may display keyword usage ranges **1022C.** For example, keyword usage ranges 1022C are displayed for each of the keywords being used in the main page, such as shown in Figs. 5 and 8. Keyword usage is an important parameter for targeting of the website to certain users based on keywords associated with the website.

For example, the user is advised to use the company name keyword and the location keyword between two to five times each in the main paragraph, and to use the first two keywords describing the services and products between two to six times each in the main paragraph.

The system may display an information bar that indicates whether or not the content text in the main paragraph is search engine optimized **1022D,** as shown in Figs. 5 and 8, for example, using a search engine analyzer **1022E.** For example, when the content text is search engine optimized by having optimal character-count and optimal keyword density, the information bar icon is the color green and indicates that the paragraph has been optimized. If the user overtypes the automatically generated and optimized content text **1022B,** a GUI interface will recognize that an update has been made to the content text and will automatically kick off the execution of the search analyzer engine **1022E**. For example, if the character-count falls below a minimum range, the analyzer engine **1022E** determines that the content text is no longer optimized and the optimizer information bar **1022D**, also shown in Figs. 5 and 8, may turn a different color or shade, such as white, that indicates the paragraph does not have enough characters to be search engine friendly.

Likewise, for example, the optimizer information bar **1022D** turns the color orange, and identifies a keyword that does not have sufficient usage in the content text to have an optimal keyword density range, as determined by the analyzer engine **1022E.** The optimizer information bar **1022D** turns the color red and identifies multiple deficient keywords, when multiple keywords are outside the optimal keyword density range, as determined by the analyzer engine **1022E.** The analyzer engine may suggest optimal content for keyword density, as depicted in **1022F** of Figs. 5 and 8. The user clicks Next> to proceed.

The next page prompts the user to select an image for the home page **1023.** The system provides a list of picture files that may be selected or the user may upload a picture file of his own if he wishes. The user clicks on one of the provided picture files. A window opens and the user clicks the icon to select the image. On the next page, the system builds the webpage and displays a preview **1024,** shown in Figs. 6 and 9. In **1023B,** the user may select a preferred size for the image. Additionally in **1024B,** the user may make changes or clicks Continue to proceed. On the next page, the user is notified by the Paragraph Manager that a search engine optimization analysis was performed and the content on the website is optimized **1025.** In **Figure 5,** a visual example of the system showing that the content on the web site is optimized is shown. On the next page, the user is notified by the Paragraph Manager that there is a "Keyword Alert" **1025.** Optimization may be completed for any paragraph, as depicted in **Figure 5.** Alternatively, optimization may be completed for the whole page, as shown in Figure 7. In a still further embodiment, optimization may be completed for the entire web site. Optimization may be thus completed for any paragraph, a whole page, the entire web site or any combination of the foregoing.

In **Figure 4F,** the Keyword Alert indicates that a search engine optimization analysis was performed. In one example, the last two keywords describe services and products have not been used yet. In one example, as shown in **Fig. 7,** a button **1025B** is displayed to Add a Paragraph. The user clicks on the button to proceed. On the next page, the user is prompted to select Left Image, Right Image or No Image as the New Paragraph Layout by clicking on a radio button below each option **1026.** The user clicks a radio button and Next> to proceed. On the next page, the Paragraph page is displayed just as the Main Paragraph page was displayed **1022.** The system automatically generates and displays a heading containing the unused keywords **1022A,** automatically generates and displays content text containing the unused keywords **1022B,** displays the search engine optimal keyword usage ranges **1022C,** and displays the information bar that indicates whether or not the content text is optimized **1022D.** Optimization may be completed for the whole page, as depicted in **Figure 7.** Alternatively, optimization may be completed for the any paragraph, as shown in **Figure 5.** In a still further embodiment, optimization may be completed for the entire web site any paragraph, a page, or any combination of the foregoing. If combination is used, then the software may make suggestions for moving content and/or keywords from one paragraph to another. In addition, the order of the paragraphs may be arranged or a suggestion given for rearranging the paragraphs..

The user clicks Next> to proceed. On the next page, the user is prompted to select another image for the home page **1023,** for example. The system provides a list of picture files that may be selected or the user may again upload a picture file of his own if he wishes. The user clicks on one of the provided picture files. A window opens and the user clicks the icon to select the image. On the next page, the system builds the webpage and displays a preview **1024** again. On the next page, the user is notified by the Paragraph Manager that a search engine optimization analysis was performed and the content on the website is optimized **1025.** The Paragraph manager page displays the heading for the main paragraph and the second paragraph. As depicted in **Fig. 10,** in one example, a button for arrow up **1025E** and for arrow down **1025H** is next to each paragraph heading. If two or more paragraphs in addition to the main paragraph had been created, the arrow buttons would allow the additional paragraphs to be resequenced by clicking on the arrow buttons. In one example, the main paragraph is not capable of being resequenced. A button **1025C** may displayed to add an additional paragraph. Also shown in Fig. 10, edit function structures **1025F, 1025G** may be used to edit paragraphs. The user clicks on Next> to proceed. On the next page, the user is notified that the home page is finished 1027, as depicted in **Fig. 4F.** By clicking on buttons on this page, the user may preview the website **1028,** activate the website **1029,** or continue building the website **1030.**

If, for example, the user clicked on the Continue Building button, the user would be led to the Contact Us assistant series of pages **1040,** then to the Products assistant series of pages 1050, and finally to the Finished page **1060.**

Alternative combinations and variations of the examples provided will become apparent based on this disclosure. It is not possible to provide specific examples for all of the many possible combinations and variations of the embodiments described, but such combinations and variations may be claims that eventually issue.

## Claims

1. A search engine optimization system for developing website content provided by a user, the system comprising:
an analyzer engine capable of analyzing the website content; and
an optimizer, wherein the optimizer notifies the user of an optimization status of the website content based on the results of the analyzer engine.

2. The system of claim 1, wherein the analyzer engine determines a number of characters in at least one paragraph of the website content and compares the number of characters to a minimum number of characters for the at least one paragraph of the website content.

3. The system of claim 2, wherein the analyzer engine determines a number of characters in a main paragraph and compares the number of characters to a minimum number of characters in the main paragraph.

4. The system of claim 2, wherein the analyzer engine determines the number of characters in each of the at least one paragraph of the website content and compares the number to the minimum number of characters for each of the at least one paragraph of the website content.

5. The system of claim 4, wherein the analyzer engine compares the number to both the minimum number of characters for each of the at least one paragraph of the website content and a maximum number of characters for each of the at least one paragraph of the website content.

6. The system of claim 2, wherein the analyzer engine determines a first keyword density and compares the first keyword density to a minimum keyword density.

7. The system of claim 6, wherein the analyzer compares the first keyword density to both the minimum keyword density and a maximum keyword density.

8. The system of claim 7, wherein the minimum keyword density is in a range between 0.002 first keywords/characters and 0.00625 first keywords/characters.

9. The system of claim 7, wherein the analyzer compares a second keyword density to both the minimum keyword density and the maximum keyword density.

10. The system of claim 2, wherein the analyzer engine determines a first keyword usage and compares the first keyword usage to a minimum keyword usage.

11. The system of claim 10, wherein the analyzer compares the first keyword usage to both the minimum keyword usage and a maximum keyword usage.

12. The system of claim 10, wherein the minimum keyword usage is in a range between 2 keywords and 8 keywords.

13. The system of claim 12, wherein the minimum keyword usage is at least 7 keywords.

14. The system of claim 12, wherein the minimum keyword usage is 8 keywords.

15. The system of claim 10, wherein the analyzer compares a second keyword usage to the minimum keyword usage.

16. The system of claim 15, wherein the minimum keyword usage is in a range from 2 keywords to 8 keywords.

17. The system of claim 16, wherein the minimum keyword usage is at least 7 keywords.

18. The system of claim 17, wherein the minimum keyword usage is 8 keywords.

19. The system of claim 10, wherein the minimum number of characters for the at least one paragraph of the website content is at least 800.

20. The system of claim 15, wherein the analyzer compares a keyword usage for at least three keywords to a first minimum keyword usage and a second minimum keyword usage, such that at least one of the at least three keywords is compared to the first minimum keyword usage, while another of the at least three keywords is compared to the second minimum keyword usage.

21. The system of claim 1, wherein the optimizer notifies the user of the optimization status by changing a color of an optimization bar to one of red, yellow or green.

22. The system of claim 21, the optimizer notifies the user of the optimization status using text to suggest changes to the website content.

23. The system of claim 1, further comprising a preview subsystem capable of providing a visual update of any processing step in building a web site.

24. The system of claim 23, wherein the processing step uses a look-up table to determine a next subsystem to be accessed by the user.

25. The system of claim 1, wherein the analyzer engine determines whether a metatag content has a specific density of keywords.

26. The system of claim 3, the analyzer engine determining a number of characters in additional paragraphs and compares the number of characters to a minimum number of characters in additional paragraphs.

27. The system of claim 26, wherein the additional paragraphs include a system of reordering the position of the paragraphs on website content.

28. The system of claim 20, wherein the analyzer engine has a second minimum keyword usage mentioned two to three times.

29. A method of optimizing website content for improved visibility by a search engine, comprising:
analyzing an optimization status of the website content;
notifying a user of the optimization status determined during the step of analyzing; and
updating the optimization status as the user updates the website content.
